# EUROPEAN PATENT APPLICATION

(11) **EP 1 681 845 A2**
(43) Date of publication of application: **19.07.2006**
(21) Application number: 05111484.1
(22) Date of filing: 30.11.2005
(51) Int. Cl.: H04N 1/00, H04N 1/191, H04N 1/193, B41J 3/46, H04N 1/024

(54) **Printing and Scanning of Information**

(30) Priority: 18.01.2005 KR 2005004440; 28.03.2005 KR 2005025371
(71) Applicant: Samsung Electronics Co., Ltd., Suwon-si, Gyeonggi-Do (KR)
(72) Inventor: Yoo, Yong-jun 231-201 Hwanggol Maeul, Suwoni-si Gyeonggi-do (KR); Lee, Sang-hyup 335-402 Jugong Apt.,, Suwon-si Gyeonggi-do (KR)
(74) Representative: Jackson, Jonathan Andrew

(57) **Abstract**

A method and apparatus for printing and scanning of information is described. This is achieved by having a combined printing and scanning head (50) located in the apparatus. The combined head (50) has a printing means (30) and scanning means (40) facing in different directions allowing scanning and printing to take place at the same time. Also, the apparatus is configured to have the document to be scanned placed in a different location to that when the document is being printed.

## Description

The present invention relates to the printing and scanning of information.

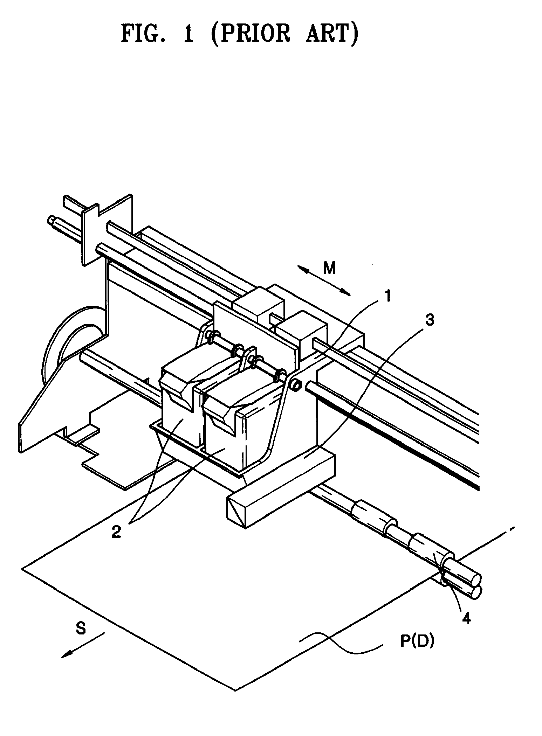

Figure 1 is a schematic perspective view of a conventional image input/output apparatus. Referring to Figure 1, a shuttle-type inkjet head 2 and a scan unit 3 are mounted on a carriage 1 that moves backwards and forwards in a main scanning direction M. A sheet of paper P and a document D are fed along a common feed path by a common feed unit 4. If an image is to be input from the document D, the feed unit 4 feeds the document D in a sub-scanning direction S. When the carriage 1 moves in the main scanning direction M, the scan unit 3 reads the image from the document D. If an image is to be printed on the sheet of paper P, the feed unit 4 feeds the sheet of paper P in the sub-scanning direction S. When the carriage 1 moves in the main scanning direction M, the inkjet head 2 ejects ink to the sheet of paper P to print the image.

The image input/output apparatus is structured in a simple manner, such that the sheet of paper P and the document D are fed along the common feed path by the common feed unit 4. However, the conventional image input/output apparatus has the following drawbacks.

Firstly, since the scan unit 3 and the document D are moved in the main scanning direction M and the sub-scanning direction S, respectively, while the image is read from the document D, high scanning precision is very difficult to maintain.

Secondly, since the feed unit 4 is generally designed to feed the sheet of paper P, the sheet of paper P and the document D must be limited to an allowable thickness to ensure that it is properly fed. However, in general, documents D have various thicknesses. If a document D has a thickness that is greater than the allowable thickness or a defective document D is fed into the apparatus, feeding precision deteriorates.

Thirdly, when the copying function is performed, an image should be printed on the sheet of paper P after the image information of at least one page is completely read from the document D. Accordingly, the copying speed is very slow and a memory is required which is capable of storing the image information of at least one page. In particular, since the process of copying a colour image requires a greater amount of image information, a huge memory is often required, thereby increasing the cost of the image input/output apparatus.

Accordingly, the present invention aims to address the above problems.

According to a first aspect of the present invention, there is provided apparatus comprising page scanning means and printing means which are configured to face in substantially different directions to one another, such that printing and scanning can be performed substantially simultaneously.

According to another aspect of the present invention, there is provided a combined printer and scanner apparatus, comprising an apparatus according to the first aspect, a page support for supporting a page to be scanned by the page scanning means and a platen to support a page to be printed by the printing means, wherein the combined printer/scanner module is located between the page support and the platen and the page scanning means faces the page support and the printing means faces the platen.

The combined printer and scanner apparatus may be configured such that when operating in a copying mode, the page scanning means is operable to scan a first line on the page and after the first line has been scanned, the printing means is operable to print a copy of the first line before a second line is scanned.

The printing means may be an inkjet array head having a nozzle unit substantially extending across the width of the page to be printed and the printing means and document scanning means are configured to be moved in the same direction.

According to another aspect of the present invention, an image input/output apparatus is provided comprising a document support on which a document can be loaded, a platen disposed in parallel to the document support for allowing a sheet of paper to be loaded thereon, and an image input/output module disposed between the document support and the platen and configured to be moved in a sub-scanning direction, wherein the image input/output module comprises an array inkjet head including a nozzle unit with a length corresponding to a width of the sheet of paper for printing an image on the sheet of paper and a scan unit for reading image information from the document.

The image input/output apparatus may further comprise a feed unit for drawing up and loading the sheet of paper on the platen, and a discharge unit for discharging the sheet of paper on which printing is completed. While printing is performed by the array inkjet head, the sheet of paper may be in a position selected from the group consisting of a position wherein a front end of the sheet of paper is inserted into the discharge unit, a position wherein a rear end of the sheet of paper is inserted into the feed unit, and a position wherein the front end and the rear end of the sheet of paper are inserted into the discharge unit and the feed unit, respectively.

The platen may be comprised of a belt that is circulated in the sub-scanning direction.

The image input/output apparatus may further comprise a negative pressure providing unit disposed under the platen for providing a negative pressure to prevent the sheet of paper from coming off the platen.

The image input/output apparatus may further comprise guide members installed in the sub-scanning direction for guiding the image input/output module in the sub-scanning direction, and a motor for moving the image input/output module in the sub-scanning direction.

The image input/output apparatus may further comprise a paper supply cassette on which the sheet of paper is loaded, wherein the paper supply cassette is disposed under the platen and forms a C-shaped paper feed path.

The image input/output apparatus may further comprise a paper supply cassette on which the sheet of paper is loaded, wherein the paper supply cassette is installed in the form of a bin and forms an L-shaped paper feed path.

According to another aspect of the present invention, an image input/output module is provided comprising an array inkjet head including a nozzle unit with a length corresponding to a width of a sheet of paper for printing an image on the sheet of paper, and a scan unit directed in a direction opposite to that of the inkjet head for reading image information from a document.

According to still another aspect of the present invention, a method is provided of inputting and outputting an image using an image input/output apparatus that includes a document support, a platen, and an image input/output module having an array inkjet head and a scan unit disposed between the document support and the platen, the method comprising the steps of reading image information on at least one line from the document loaded on the document support using the scan unit while moving the image input/output module in a sub-scanning direction, converting the read image information into print information, and printing an image on a sheet of paper loaded on a platen according to the print information using the inkjet head.

According to yet another aspect of the present invention, a method is provided of inputting and outputting an image using an image input/output apparatus that includes a document support, a platen, and an image input/output module having an array inkjet head and a scan unit disposed between the document support and the platen, the method comprising the steps of reading image information corresponding to one page from the document loaded on the document support using the scan unit while moving the image input/output module in a sub-scanning direction, converting the read image information into print information, and printing an image on a sheet of paper loaded on the platen according to the print information using the image input/output module.

After the scanning is completed, the printing of the image on the sheet of paper may comprise the step of printing an image on a sheet of paper while moving the image input/output module in a direction opposite to the direction during the scanning.

After the scanning is completed, the printing of the image on the sheet of paper may further comprise the step of returning the image input/output module to its original position and printing an image on a sheet of paper while moving the same in the sub-scanning direction again.

After the scanning is completed, the printing of the image on the sheet of paper may still further comprise the step of placing the image input/output module at a predetermined position and printing an image on a sheet of paper while moving the sheet of paper in the sub-scanning direction.

The method may further comprise the step of supplying the sheet of paper into position on the platen before the reading of the image information from the document.

The sheet of paper may be placed in a position selected from the group consisting of a position wherein a front end of the sheet of paper is inserted into a discharge unit, a position wherein a rear end of the sheet of paper is inserted into a feed unit, and a position wherein the front end and the rear end of the sheet of paper are respectively inserted into the discharge unit and the feed unit.

Embodiments of the present invention will now be described, by way of example only, and with reference to Figures 2 to 6 of the accompanying drawings, in which:
Figure 1 is a perspective view of a conventional image input/output apparatus;
Figure 2 is a cross-sectional view of an image input/output apparatus according to an embodiment of the present invention;
Figure 3 is a cross-sectional view of an image input/output apparatus according to another embodiment of the present invention;
Figure 4 is a perspective view of the units for moving an image input/output module in a sub-scanning direction;
Figure 5 is a schematic view of a nozzle unit according to an embodiment of the present invention; and
Figure 6 is a cross-sectional view of an image input/output apparatus according to still another embodiment of the present invention.

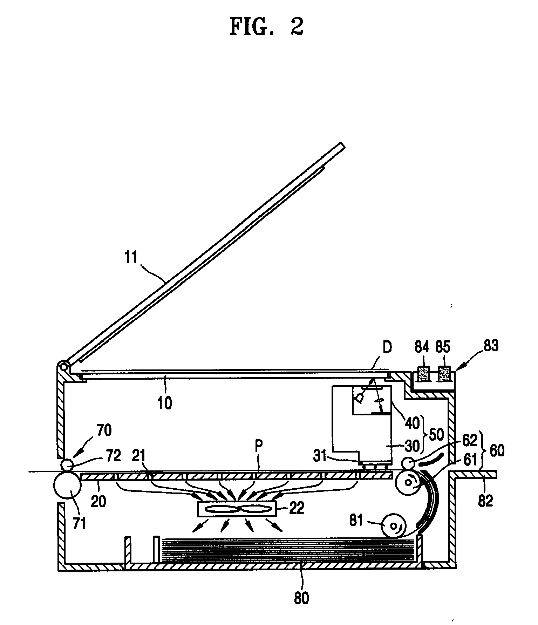

Referring to Figure 2, the image input/output apparatus according to the present invention comprises a transparent document support 10 on which a document D is loaded, a platen 20 on which a sheet of paper P is loaded, and an image input/output module 50. The document support 10 and the platen 20 are disposed in parallel to each other, and the image input/output module 50 is disposed between the document support 10 and the platen 20. The image input/output module 50 comprises an inkjet head 30 which ejects ink onto the sheet of paper P to print an image, and a scan unit 40 which reads image information from the document D. The scan unit 40 and the inkjet head 30 are directed to face in opposite directions.

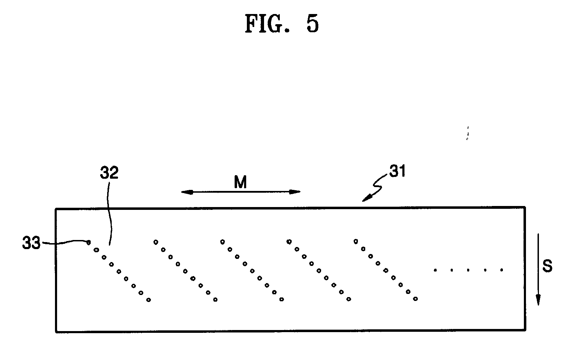

Unlike the known inkjet head 1 shown in Figure 1 that ejects ink to the sheet of paper P while moving backwards and forwards in a main scanning direction M, the inkjet head 30 of the exemplary embodiment includes a nozzle unit 31 having a length extending in the main scanning direction M that corresponds to the width of the sheet of paper P. An example of the nozzle unit 31 is illustrated in Figure 5.

Referring to Figure 5, a plurality of nozzles 32, which slant in the main scanning direction M, is arranged along the length of the main scanning direction M. The interval between adjacent columns 33 of nozzles 32 in the main scanning direction M is a measure of the resolution of the inkjet head 30. Although not shown, the inkjet head 30 further includes an ink cartridge in which ink is stored, a chamber with an ejecting unit (such as a piezo element or a heater) connected with the respective nozzles 32 and providing a pressure to eject ink, a fluid path through which ink is supplied from the ink cartridge to the chamber, and so on. Since the chamber, ejecting unit, fluid path, and the like, are well known to those skilled in the art, a detailed explanation thereof will not be given. The nozzle unit 31 depicted in Figure 5 is just one example and the scope of the present invention is not limited to the shape and configuration of the nozzle unit 31 depicted in Figure 5.

Returning to Figure 2, a contact-type image sensor (CIS) or a charge-coupled device (CCD), which can input an image line by line, can be used as the scan unit 40. Since the structure and operating principles of the CIS and the CCD are well known to those skilled in the art, a detailed explanation thereof will not be given.

The platen 20 supports a rear surface of the sheet of paper P and maintains a distance between a top surface of the sheet of paper P and the nozzle unit 31. In an exemplary embodiment of the present invention, the distance may range from about 0.5 mm to about 2.5 mm. To maintain the distance during printing, the image input/output apparatus may further comprise a negative pressure providing unit that provides a negative pressure to the rear surface of the sheet of paper P to ensure that the top surface of the paper P lies flat on the platen 20. For example, the negative pressure providing unit may comprise air vents 21 formed in the platen 20, and a fan 22 disposed under the platen 20. The fan 22 will then suck air in through the air vents 21 as shown in Figure 2 to prevent the sheet of paper P from coming off the platen 20. Although not shown, various apparatuses such as a vacuum sucking device may be used as the negative pressure providing unit in other embodiments of the present invention.

A feed unit 60 is provided for drawing up and loading the sheet of paper P onto the platen 20 and is installed at an inlet side of the inkjet head 30. The feed unit 60 comprises a feed roller 61, and an idle roller 62 which contacts and is driven by the feed roller 61. A discharge unit 70 is provided for discharging the printed sheet of paper P from the platen 20. The discharge unit 70 is installed at an outlet side of the platen 20. The discharge unit 70 comprises a discharge roller 71, and a star wheel 72 which contacts and is rotated by the discharge roller 71. A point-contacting surface on the star wheel 72 contacts the top surface of the sheet of paper P.

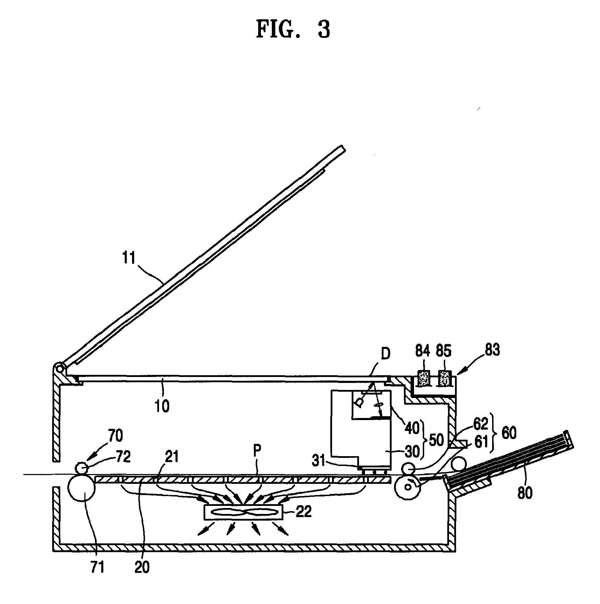

A paper supply cassette 80 into which sheets of paper P are loaded is located under the platen 20 as shown in Figure 2. The paper supply cassette 80 is located such that a C-shaped paper feed path is formed. This construction reduces the "foot-print" of the image input/output apparatus ensuring that minimal desk space is taken up by the apparatus. To directly supply a non-standard sheet of paper P to the feed unit 60, a multi-purpose tray 82 may be further provided. The paper supply cassette 80 may also be installed at one side of the image input/output apparatus in the form of a bin as shown in Figure 3. This will form an L-shaped paper feed path. As is seen from the embodiment of Figure 3, the construction of the apparatus therein achieves a slim-line image input/output apparatus.

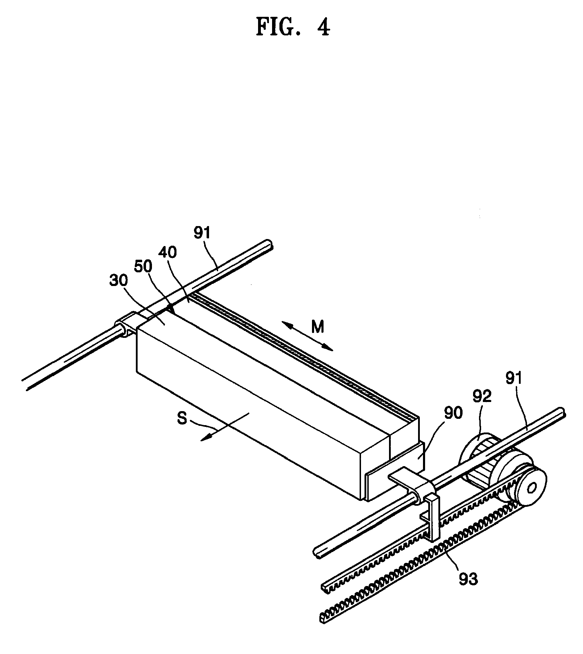

As shown in Figure 4, the image input/output module 50 is moved in a sub-scanning direction S. Referring to Figure 4, the image input/output module 50 is mounted on a carriage 90. The carriage 90 is supported by shafts (or guide members) 91 that are installed in the sub-scanning direction S. The carriage 90 is connected to a timing belt (or a wire) 93 that is moved by a motor 92. In this construction, the image input/output module 50 is moved backwards and forwards in the sub-scanning direction S by rotating the motor 92 in forward and reverse directions.

In one embodiment, the scan unit 40 and the inkjet head 30 are also mounted on the carriage 90. Alternatively, in another embodiment of the present invention, the inkjet head 30 may be mounted on the carriage 90 and the scan unit 40 may be coupled to the inkjet head 30. In still another embodiment of the present invention, the inkjet head 30 and the scan unit 40 may be integrally formed with one another. If the inkjet head 30 and the scan unit 40 are integrally formed with one another, they can share common parts, such as a cable (not shown) which is used for providing electrical connections to a control unit (not shown), and a frame (not shown) which defines the outer appearance of the image input/output module 50. Further, in yet another embodiment of the present invention, the scan unit 40 and the inkjet head 30 may be directly supported by the shafts 91 without the carriage 90.

A method of inputting and outputting an image using an exemplary image input/output apparatus constructed as above will now be described in greater detail.

Returning to Figures 2 and 4, if print information is input together with a print signal from a host computer (not shown), a pickup roller 81 picks up a sheet of paper P from the paper supply cassette 80, and supplies this to the feed unit 60. The feed unit 60 draws up and loads the sheet of paper P onto the platen 20. When the front end and the rear end of the sheet of paper P are respectively partially inserted into the discharge unit 70 and the feed unit 60, or when the rear end of the sheet of paper P is partially inserted into the feed unit 60 before the front end of the sheet of paper P reaches the discharge unit 70, or even when the front end of the sheet of paper P is partially inserted into the discharge unit 70 and the rear end of the sheet of paper P has passed completely through the feed unit 60, then the sheet of paper P is supported by the platen 20 such that a predetermined distance is maintained between the sheet of paper P and the nozzle unit 31. If the motor 92 is rotated normally (rotated in a forward direction), the image input/output module 50 is moved in the sub-scanning direction S. The inkjet head 30 ejects ink onto the sheet of paper P to print an image. When the printing is complete, the sheet of paper P is discharged by the discharge unit 70. If the motor 92 is then rotated in the reverse direction, the image input/output module 50 returns to its original position. Alternatively, in the printing operation, the sheet of paper P can be fed by the feed unit 60 towards the discharge unit 70 while the inkjet head 30 is in its fixed position and ejects ink onto the sheet of paper P to print the image.

To read image information (to scan information) from the document D, the document D is loaded onto the document support 10 and a document cover 11 is closed. If a user presses an image input button 84 on an operation panel 83, or sends an image input command through the host computer (not shown), the motor 92 is rotated in the forward direction and thus, the image input/output module 50 is moved in the sub-scanning direction S. The scan unit 40 emits light onto the document D, detects the reflected light signal, and reads image information printed on the document D. The image information is then transferred to a storage device (not shown) of the host computer. After the scanning is completed, if the motor 92 is rotated in the reverse direction, the image input/output module 50 returns to its original position.

To copy the document D, it is loaded on the document support 10 and the document cover 11 is closed. If the user presses a copy button 85 on the operation panel 83, or sends a copy command through the host computer, the sheet of paper P is picked up by the pickup roller 81 from the paper supply cassette 80 and is drawn up and loaded on the platen 20 by the feed unit 60. When the front end and the rear end of the sheet of paper P are respectively partially inserted into the discharge unit 70 and the feed unit 60, or when the rear end of the sheet of paper P is partially inserted into the feed unit 60 before the front end of the sheet of paper P reaches the discharge unit 70, or even when the front end of the sheet of paper P is partially inserted into the discharge unit 70 and the rear end of the sheet of paper P has passed completely through the feed unit 60, the printing operation is performed. If the motor 92 is rotated in the forward direction, the image input/output module 50 is moved in the sub-scanning direction S. The scan unit 40 emits light onto the document D, detects the reflected light signal, and reads a line of image information or a band of image information containing a plurality of lines recorded on the document D. The image information is converted into print information using an image processor (not shown) and is then input to the inkjet head 30. The inkjet head 30 ejects ink in accordance with the print information so as to print an image on the sheet of paper P.

Since the image processor converts the image information into the print information in almost real time, scanning and printing operations are simultaneously performed with a gap of one line or one band therebetween. Accordingly, almost real time copying is possible. The exemplary embodiment of the image input/output apparatus therefore needs only a small buffer memory that is capable of storing image information of at least one line or one band. Accordingly, a more inexpensive image input/output apparatus compared with a conventional image input/output apparatus can be realized, in which the document and the sheet of paper have the same path.

While the scanning and/or copying operation is performed, only the scan unit 40 is moved in the sub-scanning direction S and the document D is stationary. Accordingly, more precise scanning can be achieved than in the conventional image input/output apparatus in which the document D and the scan unit 40 are moved simultaneously.

In general, an image forming apparatus employing the array inkjet head 30 is structured such that the inkjet head 30 is stationary and the sheet of paper P is moved in the sub-scanning direction S. To perform flatbed scanning using the image forming apparatus, the scan unit 40 should preferably be moved in the sub-scanning direction S. Also, since the motor 92 for moving the scan unit 40 and a motor (not shown) for feeding the sheet of paper P should be simultaneously driven to perform copying, the image forming apparatus should preferably precisely control both motors, which increases the burden on a control unit (not shown). Also, the vibration of the motor generated during the feeding of the sheet of paper P may affect the scanning, thereby deteriorating scanning precision.

The image input/output apparatus of the exemplary embodiments of the present invention moves the inkjet head 30 and the scan unit 40 alike in the sub-scanning direction S, and does not feed the sheet of paper P during the copying process. Accordingly, only the motor 92 for moving the inkjet head 30 and the scan unit 40 needs to be controlled, thereby reducing the burden on the control unit. Also, vibration is low and thus, precise scanning can be achieved.

In general, the feeding precision of the sheet of paper P is lower than the feeding precision of the inkjet head 30. Since the sheet of paper P is fed using the frictional force between the feed roller 61, the idle roller 62, and the sheet of paper P, a slip may occur. Since the inkjet head 30 is moved by the very precise timing looped belt (or wire) 93 and guided by the shafts 91, the inkjet head 30 can be moved in a very precise manner. Since the inkjet head 30 prints an image on the sheet of paper P while being moved in the sub-scanning direction S, the exemplary image input/output apparatus of the present embodiment can ensure higher print quality than the conventional apparatus in which the inkjet head 30 is fixed and the sheet of paper P is fed in the sub-scanning direction S. Also, since the inkjet head 30 is moved together with the scan unit 40, a separate unit for moving the inkjet head 30 in the sub-scanning direction S is not required.

If a buffer memory that is capable of storing image information corresponding to one page is employed, a scanning process and a printing process may be separated to further improve scan and print quality. In detail, image information is read from the front end of the document D while the image input/output module 50 is moved in the sub-scanning direction S, and is then stored in the buffer memory. When scanning to the rear end of the document D is complete, the input image information is converted into print information using the image processor. The image input/output module 50 then prints the image on the sheet of paper P according to the print information whilst it is being moved in the direction opposite to the direction during the scanning. However, at the same time that the image information is read from the front end to the rear end of the document D, the input image information is converted into print image for printing using the image processor. In this way, although the scanning process and the printing process are separated, the copying process can be performed by moving the image input/output module 50 only once, thereby preventing a low copy speed.

The image input/output module 50 may return to its original position after the scanning is completed and then move again in the sub-scanning direction S to print an image on the sheet of paper P. Also, the image input/output module 50 may be placed in a position, such as the position after scanning, its original position, or an arbitrary position between these two positions. After the scanning is completed, the sheet of paper P may be moved in the sub-scanning direction S to print an image thereon.

A display unit (not shown) such as a liquid crystal display unit may be further provided on the operation panel 83 to display an operating state of the image input/output apparatus. The user can recognise the operating state of the image input/output apparatus, for example, which of the operations (including printing, scanning, and copying) is being performed or whether the operation is completed, from the information displayed on the display unit.

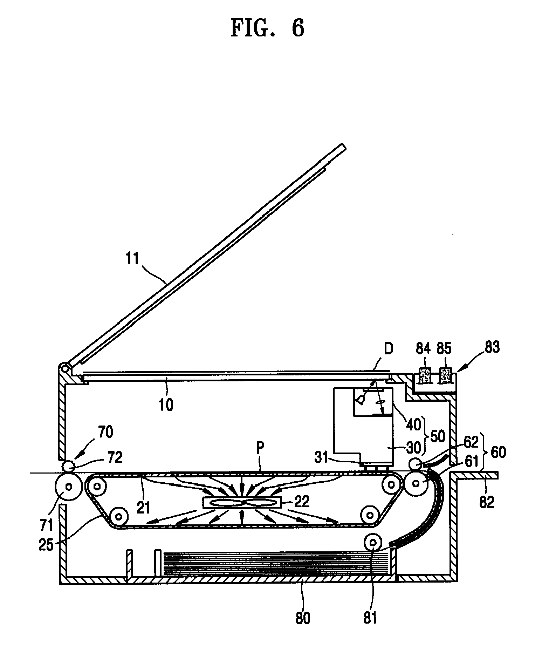

The platen 20 may be comprised of a belt 25, which is moved in the sub-scanning direction S as shown in Figure 6. Figure 6 is a cross-sectional view of an image input/output apparatus according to still another embodiment of the present invention. The air vents 21 are formed in the belt 25. The fan 22 sucks air in through the air vents 21 to prevent the sheet of paper P from coming off the belt 25. When the belt 25 is employed as the platen 20, a front end and a rear end of the paper P are spaced apart from the discharge unit 70 and the convey unit 60 while printing. In this case, borderless printing of the sheet of paper P can be achieved so that an image can be printed without white borders.

As described above, the image input/output module, image input/output apparatus, and method for inputting and outputting an image according to an embodiment of the present invention has at least the following advantages.

Firstly, an image input/output apparatus that is capable of copying information in almost real time can be realized. An inexpensive image input/output apparatus can be realised since copying can be performed with a small buffer memory that only needs to be capable of storing one line or one band of image information.

Secondly, since the inkjet head and the scan unit are moved in the sub-scanning direction and the sheet of paper is not moved while copying is performed, the burden on the control unit is lowered. Also, since low vibration occurs, precise scanning can be performed.

Thirdly, since an image can be printed on the sheet of paper while the inkjet head is precisely moved in the sub-scanning direction, higher print quality can be ensured than in the conventional methods in which the sheet of paper is fed in the sub-scanning direction.

Fourthly, if a buffer memory that is capable of storing image information corresponding to one page is employed, scan and print quality can be further improved by separating the scanning and printing processes.

Fifthly, a slim flatbed image input/output apparatus having a minimum foot-print design can be realised by adjusting the position of the paper supply cassette.

While the present invention has been particularly shown and described with reference to exemplary embodiments thereof, it will be understood by those of ordinary skill in the art that various changes in form and details may be made therein without departing from the present invention as defined by the following claims.

## Claims

1. Apparatus (50) comprising page scanning means (40) and printing means (30) which are configured to face in substantially different directions to one another, such that printing and scanning can be performed substantially simultaneously.

2. A combined printer and scanner apparatus, comprising apparatus (50) according to claim 1, a page support (D) for supporting a page to be scanned by the page scanning means (40) and a platen (P) to support a page to be printed by the printing means (30), wherein the apparatus (50) is located between the page support (D) and the platen (P) and the page scanning means (40) faces the page support (D) and the printing means (30) faces the platen (D).

3. A combined printer and scanner apparatus according to claim 2, configured such that when operating in a copying mode, the page scanning means (40) is operable to scan a first line forming part of the page to be scanned and after the first line has been scanned, the printing means (30) is operable to print a copy of the first line before a second line is scanned.

4. A combined printer and scanner apparatus according to either one of claims 2 or 3 wherein the printing means (30) is an inkjet array head (31) having a nozzle unit substantially extending across the width of the page to be printed and the printing means (30) and document scanning means (40) are configured to be moved in the same direction (S).

5. An image input/output apparatus, comprising:
a document support on which a document can be loaded;
a platen disposed in parallel to the document support for allowing a sheet of paper to be loaded thereon; and
an image input/output module disposed between the document support and the platen and configured to be moved in a sub-scanning direction, wherein the image input/output module comprises an array inkjet head including a nozzle unit with a length corresponding to a width of the sheet of paper for printing an image on the sheet of paper and a scan unit for reading image information from the document.

6. The image input/output apparatus of claim 5, further comprising:
a feed unit for drawing up and loading the sheet of paper on the platen; and
a discharge unit for discharging the sheet of paper on which printing is completed.

7. The image input/output apparatus of claim 6, wherein while printing is performed by the array inkjet head, the sheet of paper is in a position selected from the group consisting of a position wherein a front end of the sheet of paper is inserted into the discharge unit, a position wherein a rear end of the sheet of paper is inserted into the feed unit, and a position wherein the front end and the rear end of the sheet of paper are inserted into the discharge unit and the feed unit, respectively.

8. The image input/output apparatus of claim 5, wherein the platen is comprised of a belt that is circulated in the sub-scanning direction.

9. The image input/output apparatus of one of claims 5 to 8, further comprising a negative pressure providing unit disposed under the platen for providing a negative pressure to prevent the sheet of paper from coming off the platen.

10. The image input/output apparatus of one of claims 5 to 8, further comprising:
at least one guide member installed in the sub-scanning direction for guiding the image input/output module in the sub-scanning direction; and
a motor for moving the image input/output module in the sub-scanning direction.

11. The image input/output apparatus of one of claims 5 to 8, further comprising a paper supply cassette on which the sheet of paper is loaded, wherein the paper supply cassette is disposed under the platen and forms a C-shaped paper feed path.

12. The image input/output apparatus of one of claims 5 to 8, further comprising a paper supply cassette on which the sheet of paper is loaded, wherein the paper supply cassette is installed in the form of a bin and forms an L-shaped paper feed path.

13. The image input/output apparatus of one of claims 5 to 8, further comprising an operation panel including at least one button for operating the image input/output apparatus.

14. The image input/output apparatus of claim 13, wherein the operation panel comprises a display unit for displaying an operating state of the image input/output apparatus.

15. An image input/output module, comprising:
an array inkjet head including a nozzle unit with a length corresponding to a width of a sheet of paper for printing an image on the sheet of paper; and
a scan unit directed in a direction opposite to that of the inkjet head for reading image information from a document.

16. A method of inputting and outputting an image using an image input/output apparatus that includes a document support, a platen, and an image input/output module having an array inkjet head and a scan unit disposed between the document support and the platen, the method comprising the steps of:
reading image information on at least one line from the document loaded on the document support using the scan unit while moving the image input/output module in a sub-scanning direction;
converting the read image information into print information; and
printing an image on a sheet of paper loaded on a platen according to the print information using the inkjet head.

17. The method of claim 16, further comprising the step of:
supplying the sheet of paper into position on the platen before the reading of the image information from the document.

18. The method of claim 17, wherein the sheet of paper is supplied in a position selected from the group consisting of a position wherein a front end of the sheet of paper is inserted into a discharge unit, a position wherein a rear end of the sheet of paper is inserted into a feed unit, and a position wherein the front end and the rear end of the sheet of paper are respectively inserted into the discharge unit and the feed unit.

19. A method of inputting and outputting an image using an image input/output apparatus that includes a document support, a platen, and an image input/output module having an array inkjet head and a scan unit disposed between the document support and the platen, the method comprising the steps of:
reading image information corresponding to one page from the document loaded on the document support using the scan unit while moving the image input/output module in a sub-scanning direction;
converting the read image information into print information; and
printing an image on a sheet of paper loaded on the platen according to the print information using the image input/output module.

20. The method of claim 19, wherein after the scanning is completed, the printing of the image on the sheet of paper comprises the step of:
printing an image on the sheet of paper while moving the image input/output module in a direction opposite to the direction during the scanning.

21. The method of claim 19, wherein after the scanning is completed, the printing of the image on the sheet of paper comprises the step of:
returning the image input/output module to its original position and printing an image on the sheet of paper while moving the image input/output module in the sub-scanning direction again.

22. The method of claim 19, wherein after the scanning is completed, the printing of the image on the sheet of paper comprises the step of:
placing the image input/output module at a predetermined position and printing an image on the sheet of paper while moving the sheet of paper in the sub-scanning direction.

23. The method of claim 19, further comprising the step of:
supplying the sheet of paper into position on the platen before the reading of the image information from the document.

24. The method of claim 23, wherein the sheet of paper is supplied in a position selected from the group consisting of a position wherein a front end of the sheet of paper is inserted into a discharge unit, a position wherein a rear end of the sheet of paper is inserted into a feed unit, and a position wherein the front end and the rear end of the sheet of paper are respectively inserted into the discharge unit and the feed unit.
